# EUROPEAN PATENT APPLICATION

(11) **EP 4 657 933 A1**
(43) Date of publication of application: **03.12.2025**
(21) Application number: 24769626.3
(22) Date of filing: 05.01.2024
(51) Int. Cl.: H04W 56/00

(54) **COMMUNICATION METHOD AND APPARATUS**

(30) Priority: 13.03.2023 CN 202310261315; 23.04.2023 CN 202310468849
(71) Applicant: Huawei Technologies Co., Ltd., Shenzhen, Guangdong 518129 (CN)
(72) Inventor: BI, Shuangkaisheng, Shenzhen, Guangdong 518129 (CN); LI, Xueru, Shenzhen, Guangdong 518129 (CN)
(74) Representative: MERH-IP Matias Erny Reichl Hoffmann Patentanwälte PartG mbB
(86) International application number: PCT/CN2024/070944
(87) International publication number: WO 2024/187929

(57) **Abstract**

This application relates to a communication method and apparatus. The method includes: A first terminal device sends a first sidelink synchronization signal, where the first sidelink synchronization signal includes a first sequence, the first sequence is used for carrying frame synchronization information, and the frame synchronization information is used by another terminal device to synchronize with the first terminal device. In embodiments of this application, a sequence carries frame synchronization information, so that a sensing device can implement synchronization without identifying a PSBCH.

## Description

### CROSS-REFERENCE TO RELATED APPLICATIONS

This application claims priorities to Chinese Patent Application No. 202310261315.0, filed with the China National Intellectual Property Administration on March 13, 2023 and entitled "SYNCHRONIZATION SIGNAL SENDING METHOD AND DEVICE", and to Chinese Patent Application No. 202310468849.0, filed with the China National Intellectual Property Administration on April 23, 2023 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

A device with a sensing function may be referred to as a sensing device, and the sensing device may sense a target in a manner of self-send and self-receive. For example, the sensing device may send a sensing reference signal, and may receive an echo signal reflected after the sensing reference signal reaches the target. The sensing device may sense information such as a distance and speed of the target by comparing the sensing reference signal with the echo signal.

Currently, synchronization between user equipments (user equipments, UEs) may be implemented by using a sidelink synchronization signal block (sidelink synchronization signal block, S-SSB). The S-SSB includes a sidelink primary synchronization signal (sidelink primary synchronization signal, S-PSS), a sidelink secondary synchronization signal (sidelink secondary synchronization signal, S-SSS), and a physical sidelink shared channel (physical sidelink broadcast channel, PSBCH). The PSBCH may be generated by using a process such as channel coding. In addition, some UEs can implement a sensing function. Therefore, these UEs are sensing devices, and may be referred to as sensing UEs. In many sensing scenarios (such as a home sensing scenario or an industrial application scenario), to limit costs, generally, only a simple radar sensing module is configured for a sensing UE, and functional modules such as a channel coding/decoding module and a modulation/demodulation module are not configured for the sensing UE. In this case, the sensing UE may fail to generate a PSBCH by using a process such as channel coding, and fail to perform an operation such as channel decoding on a PSBCH in a received S-SSB. Consequently, synchronization cannot be implemented.

### SUMMARY

Embodiments of this application provide a communication method and apparatus, to enable a sensing device to implement synchronization.

According to a first aspect, a first communication method is provided. The method may be performed by a terminal device, may be performed by another device including a function of the terminal device, or may be performed by a chip system (or a chip) or another functional module. The chip system or the functional module can implement the function of the terminal device, and the chip system or the functional module is, for example, disposed in the terminal device. The terminal device is, for example, a first terminal device. The first terminal device is, for example, a sensing device or a communication device. The method includes: sending a first sidelink synchronization signal, where the first sidelink synchronization signal includes a first sequence, the first sequence is used for carrying frame synchronization information, and the frame synchronization information is used by another terminal device to synchronize with the first terminal device.

In this embodiment of this application, the first sequence may be used for carrying the frame synchronization information. For example, the first terminal device is a sensing device. For the sensing device, because the frame synchronization information may be carried by using a sequence, sending of a sidelink synchronization signal is implemented. However, for a receive end of the sidelink synchronization signal, even if the receive end is a sensing device configured with only a simple radar sensing module and cannot identify a PSBCH, the sensing device can still identify the first sequence. Therefore, synchronization can be performed based on the frame synchronization information carried by using the first sequence. It may be learned that because the frame synchronization information is carried by using the sequence, the sensing device can still implement synchronization with another sensing device without identifying the PSBCH. For another example, if the first terminal device is a communication device, the communication device may also carry the frame synchronization information by using a sequence. However, for a receive end of a sidelink synchronization signal, even if the receive end is a sensing device configured with only a simple radar sensing module and cannot identify a PSBCH, the sensing device can still identify the first sequence. Therefore, synchronization can be performed based on the frame synchronization information carried by using the first sequence. It can be learned that because the frame synchronization information is carried by using the sequence, the sensing device can still implement synchronization with the communication device without identifying the PSBCH, and this is more conducive to implementing global synchronization.

In an optional implementation, the first sequence is further used for carrying a CRC. In addition to carrying the frame synchronization information, the first sequence further carries the CRC, so that a transmission success rate of the frame synchronization information can be increased.

In an optional implementation, the frame synchronization information is included in a MIB, and the MIB includes only the frame synchronization information. The MIB may include only the frame synchronization information, so that overheads of the first sequence can be reduced.

In an optional implementation, the first sequence is repeated N times in the first sidelink synchronization signal, and N is a positive integer. It may also be understood as that the first sidelink (sidelink, SL) synchronization signal includes N first sequences, and the N first sequences are the same. The first sequence is repeatedly sent, so that a received signal-to-noise ratio of the first SL synchronization signal can be increased.

In an optional implementation, the first sequence is an M sequence, a gold sequence, or a ZC sequence. In addition, the first sequence may be another sequence. This is not limited.

In an optional implementation, the first sequence occupies a plurality of consecutive frequency domain units, or occupies a plurality of frequency domain units in a comb manner; and/or the first sequence occupies one or more time domain units. The first sequence may occupy the consecutive frequency domain units in frequency domain, or may occupy the plurality of frequency domain units in the comb manner. Frequency domain distribution of the first sequence is not limited. In addition, if the first sequence is short, one time domain unit may be occupied. If the first sequence is long, a plurality of time domain units may be occupied, and the plurality of time domain units may be consecutive or inconsecutive.

In an optional implementation, the first terminal device is a sensing device. Alternatively, the first terminal device may be a communication device.

In an optional implementation, a time domain position of the first sidelink synchronization signal is determined based on a first field, the first field is used for configuring a sidelink synchronization resource for the sensing device, the first field and a second sidelink synchronization signal block time allocation field are different fields, and the second sidelink synchronization signal block time allocation field is used for configuring a sidelink synchronization resource for a communication device. This embodiment of this application provides a new sidelink synchronization signal. To be specific, the sidelink synchronization signal may carry the frame synchronization information by using a sequence. Therefore, in this embodiment of this application, the sidelink synchronization signal and a conventional (or existing) sidelink synchronization signal are respectively configured by using different fields, to distinguish between the two different sidelink synchronization signals.

In an optional implementation, the first field is used for configuring one or more of a first parameter, a second parameter, or a third parameter. The first parameter represents an offset between a time domain position of a 1^{st} sidelink synchronization signal of a sensing type within a synchronization cycle and a start time domain position of the synchronization cycle. The second parameter represents an interval between two adjacent sidelink synchronization signals of the sensing type within the synchronization cycle. The third parameter represents a total quantity of sidelink synchronization signals of the sensing type included in the synchronization cycle. A time domain position of a sidelink synchronization signal of the sensing type can be determined by using one or more of the foregoing parameters.

In an optional implementation, the first field includes a first sidelink synchronization signal block time allocation field, and the first sidelink synchronization signal block allocation field is used for configuring the first parameter, the second parameter, and the third parameter. The conventional sidelink synchronization signal also includes a sidelink synchronization signal block time allocation field. It may be considered that, in this embodiment of this application, the first sidelink synchronization signal may directly include the sidelink synchronization signal block time allocation field in the existing sidelink synchronization signal, but the sidelink synchronization signal block time allocation field included in the first field does not include an original parameter, but includes one or more of the first parameter, the second parameter, or the third parameter. This is equivalent to using an existing field format, so that the sidelink synchronization signal in this embodiment of this application can be better compatible with the conventional technology.

In an optional implementation, the first field is further used for configuring a fourth parameter. The fourth parameter represents an offset of the 1^{st} sidelink synchronization signal of the sensing type within the synchronization cycle relative to a 1^{st} sidelink synchronization signal of a communication type within the synchronization cycle. Time division between sidelink synchronization signals of the two types can be implemented by using the fourth parameter. For example, sidelink synchronization resources may be respectively configured for the sidelink synchronization signals of the two types, so that terminal devices of different types can receive, at corresponding positions, sidelink synchronization signals that can be identified.

In an optional implementation, the method further includes: receiving a second sidelink synchronization signal on a second resource; determining, based on a format of the second sidelink synchronization signal, that the second sidelink synchronization signal is a sidelink synchronization signal of the communication type; and determining a first resource based on the fourth parameter and the second resource, where the first resource is used for sending the first sidelink synchronization signal. In addition to sending a sidelink synchronization signal, a terminal device may further detect the sidelink synchronization signal. For example, after the first terminal device detects a sidelink synchronization signal, if a type of the sidelink synchronization signal does not match a type of the first terminal device, the first terminal device may determine, with reference to the fourth parameter, a time domain position used by the first terminal device to send and/or detect the sidelink synchronization signal, to reduce a conflict with a synchronization resource of another type of terminal device.

In an optional implementation, the second sidelink synchronization signal block time allocation field is used for configuring a fifth parameter, a sixth parameter, and a seventh parameter. The fifth parameter represents an offset between a time domain position of the 1^{st} sidelink synchronization signal of the communication type within the synchronization cycle and the start time domain position of the synchronization cycle. The sixth parameter represents an interval between two adjacent sidelink synchronization signals of the communication type within the synchronization cycle. The seventh parameter represents a total quantity of sidelink synchronization signals of the communication type included in the synchronization cycle. A second sidelink synchronization signal block is located in the conventional sidelink synchronization signal.

In an optional implementation, sending the first sidelink synchronization signal includes: sending the first sidelink synchronization signal in all or a part of frequency domain units supported by the first terminal device. For example, if the first terminal device supports a plurality of frequency domain units, the first terminal device may send the first sidelink synchronization signal in each of the plurality of frequency domain units, so that all terminal devices in the plurality of frequency domain units can implement synchronization.

In an optional implementation, the first terminal device is a communication device, the first sidelink synchronization signal further includes a PSBCH, and the PSBCH carries the frame synchronization information. The sidelink synchronization signal may be understood as a signal obtained by additionally adding a sequence used for carrying frame synchronization information to the conventional sidelink synchronization signal, and other content included in the existing sidelink synchronization signal may remain unchanged. This design enables this embodiment of this application to be better compatible with the conventional technology. In addition, this design can also implement synchronization between sensing devices and between the sensing device and the communication device.

According to a second aspect, a second communication method is provided. The method may be performed by a terminal device, may be performed by another device including a function of the terminal device, or may be performed by a chip system (or a chip) or another functional module. The chip system or the functional module can implement the function of the terminal device, and the chip system or the functional module is, for example, disposed in the terminal device. The terminal device is, for example, a second terminal device. The method includes: receiving a first sidelink synchronization signal from a first terminal device, where the first sidelink synchronization signal includes a first sequence, and the first sequence is used for carrying frame synchronization information; and synchronizing with the first terminal device based on the frame synchronization information.

In an optional implementation, the first sequence is further used for carrying a CRC.

In an optional implementation, the frame synchronization information is included in a MIB, and the MIB includes only the frame synchronization information.

In an optional implementation, the first sequence is repeated N times in the first sidelink synchronization signal, and N is a positive integer.

In an optional implementation, the first sequence is an M sequence, a gold sequence, or a ZC sequence.

In an optional implementation, the first sequence occupies a plurality of consecutive frequency domain units, or occupies a plurality of frequency domain units in a comb manner; and/or the first sequence occupies one or more time domain units.

In an optional implementation, the second terminal device is a sensing device.

In an optional implementation, a time domain position of the first sidelink synchronization signal is determined based on a first field, the first field is used for configuring a sidelink synchronization resource for the sensing device, the first field and a second sidelink synchronization signal block time allocation field are different fields, and the second sidelink synchronization signal block time allocation field is used for configuring a sidelink synchronization resource for a communication device.

In an optional implementation, the first field is used for configuring one or more of a first parameter, a second parameter, or a third parameter. The first parameter represents an offset between a time domain position of a 1^{st} sidelink synchronization signal of a sensing type within a synchronization cycle and a start time domain position of the synchronization cycle. The second parameter represents an interval between two adjacent sidelink synchronization signals of the sensing type within the synchronization cycle. The third parameter represents a total quantity of sidelink synchronization signals of the sensing type included in the synchronization cycle.

In an optional implementation, the first field includes a first sidelink synchronization signal block time allocation field, and the first sidelink synchronization signal block time allocation field is used for configuring the first parameter, the second parameter, and the third parameter.

In an optional implementation, the first field is further used for configuring a fourth parameter. The fourth parameter represents an offset of the 1^{st} sidelink synchronization signal of the sensing type within the synchronization cycle relative to a 1^{st} sidelink synchronization signal of a communication type within the synchronization cycle.

In an optional implementation, the second sidelink synchronization signal block time allocation field is used for configuring a fifth parameter, a sixth parameter, and a seventh parameter. The fifth parameter represents an offset between a time domain position of the 1^{st} sidelink synchronization signal of the communication type within the synchronization cycle and the start time domain position of the synchronization cycle. The sixth parameter represents an interval between two adjacent sidelink synchronization signals of the communication type within the synchronization cycle. The seventh parameter represents a total quantity of sidelink synchronization signals of the communication type included in the synchronization cycle.

In an optional implementation, the first sidelink synchronization signal further includes a PSBCH, and the PSBCH carries the frame synchronization information.

For technical effects brought by the second aspect or the optional implementations, refer to descriptions of technical effects of the first aspect or corresponding implementations.

According to a third aspect, a communication apparatus is provided. The communication apparatus may be the first terminal device in the first aspect. The communication apparatus has a function of the first terminal device. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to send a first sidelink synchronization signal, where the first sidelink synchronization signal includes a first sequence, the first sequence is used for carrying frame synchronization information, and the frame synchronization information is used by another terminal device to synchronize with the first terminal device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the first terminal device in the first aspect.

According to a fourth aspect, a communication apparatus is provided. The communication apparatus may be the second terminal device in the second aspect. The communication apparatus has a function of the second terminal device. The communication apparatus is, for example, the second terminal device, a large device including the second terminal device, or a functional module, for example, a baseband apparatus or a chip system, in the second terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions of the third aspect.

In an optional implementation, the transceiver unit (or the receiving unit) is configured to receive a first sidelink synchronization signal from a first terminal device, where the first sidelink synchronization signal includes a first sequence, and the first sequence is used for carrying frame synchronization information. The processing unit is configured to synchronize with the first terminal device based on the frame synchronization information.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the second terminal device in the second aspect.

According to a fifth aspect, a communication apparatus is provided. The communication apparatus may be a first terminal device, or may be a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to a sixth aspect, a communication apparatus is provided. The communication apparatus may be a second terminal device, or may be a chip or a chip system used in the second terminal device. The communication apparatus includes a communication interface and a processor, and optionally, further includes a memory. The memory is configured to store a computer program. The processor is coupled to the memory and the communication interface. When the processor reads the computer program or the instructions, the communication apparatus is enabled to perform the method performed by the second terminal device in the foregoing aspects.

According to a seventh aspect, a communication system is provided, and includes a first terminal device and a second terminal device. The first terminal device is configured to perform the method performed by the first terminal device in the first aspect, and the second terminal device is configured to perform the method performed by the second terminal device in the second aspect. For example, the first terminal device may be implemented by the communication apparatus in the third aspect or the fifth aspect, and the second terminal device may be implemented by the communication apparatus in the fourth aspect or the sixth aspect.

According to an eighth aspect, a computer-readable storage medium is provided. The computer-readable storage medium is configured to store a computer program or instructions. When the computer program or the instructions are run, the method performed by the first terminal device or the second terminal device in the foregoing aspects is implemented.

According to a ninth aspect, a computer program product including instructions is provided. When the instructions are run on a computer, the methods in the foregoing aspects are implemented.

According to a tenth aspect, a chip system is provided, and includes a processor and an interface. The processor is configured to invoke instructions from the interface and run the instructions, to enable the chip system to implement the methods in the foregoing aspects.

### BRIEF DESCRIPTION OF DRAWINGS

FIG. 1 is a diagram of a frame structure of an S-SSB;
FIG. 2 is a diagram of a communication network architecture to which an embodiment of this application is applied;
FIG. 3 is a flowchart of a communication method according to an embodiment of this application;
FIG. 4 is a diagram in which a UE sends SL synchronization signals in all supported frequency domain units according to an embodiment of this application;
FIG. 5A and FIG. 5B are two diagrams of parameters according to embodiments of this application;
FIG. 6 is a diagram of a frame structure of an SL synchronization signal according to an embodiment of this application;
FIG. 7 is a diagram of an apparatus according to an embodiment of this application; and
FIG. 8 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, and are not intended to limit sizes, content, a sequence, a time sequence, priorities, importance degrees, or the like of the plurality of objects. For example, a first SL synchronization signal and a second SL synchronization signal may be a same SL synchronization signal, or may be different SL synchronization signals. In addition, this name does not indicate that the two SL synchronization signals have different occupied resources, sending sequences, transmit ends/receive ends, content, sizes, application scenarios, priorities, importance degrees, or the like. In addition, step numbers in embodiments described in this application are merely intended to distinguish between different steps, but are not intended to limit a sequence of the steps.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios, for example, including but not limited to the following scenarios: a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, smart wearable, smart transportation, a smart city (smart city), an uncrewed aerial vehicle, a robot, and the like. The terminal device may sometimes be referred to as a UE, a terminal, an access station, a UE station, a remote station, a wireless communication device, a user apparatus, or the like.

In embodiments of this application, a communication apparatus configured to implement a function of the terminal device may be the terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes, but is not limited a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a subsequently evolved base station in a 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a roadside unit (roadside unit, RSU). The following uses an example in which the access network device is a base station for description. The base station may communicate with the terminal device, or may communicate with the terminal device via a relay station. The terminal device may communicate with the plurality of base stations using different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is a network device.

In embodiments of this application, a device that can implement a sensing function may be referred to as a sensing device. The sensing device may include a network device (which may be referred to as a sensing network device), a UE (which may be referred to as a sensing UE), and/or the like. For example, a sensing device is a radar. The sensing device may sense a target in a manner of self-send and self-receive. For example, the sensing device may send a sensing reference signal, and may receive an echo signal reflected after the sensing reference signal reaches the target. The sensing device may sense information such as a distance and speed of the target by comparing the sensing reference signal with the echo signal. Wireless sensing performance depends on two dimensions: time and a bandwidth. Longer time indicates that higher speed resolution can be obtained. A larger bandwidth indicates that higher distance resolution can be obtained.

The sensing device may not have a communication module, and the sensing device does not have a communication function. For example, the sensing device does not have functional modules such as a channel coding/decoding module and a modulation/demodulation module. Alternatively, the sensing device may have a simple communication module, but the sensing device only has a weak communication function, and cannot implement a complex communication function, for example, cannot generate and/or parse a PSBCH.

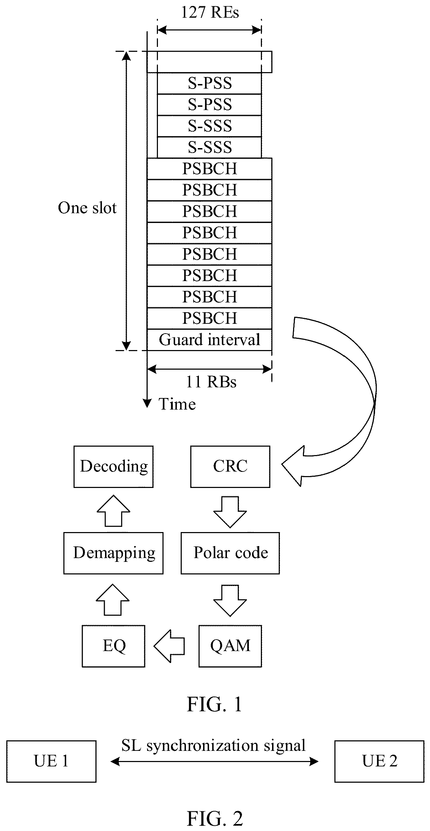

Currently, synchronization between UEs is implemented by using an S-SSB. For example, one UE may send an S-SSB to enable another UE to synchronize with the UE. The S-SSB includes an S-PSS, an S-SSS, a PSBCH, and a guard (guard) interval. For this, refer to FIG. 1. The S-PSS is an m sequence with a length of 127, the S-SSS is a gold sequence with a length of 127, and the S-PSS and the S-SSS each occupy 127 consecutive resource elements (resource elements, REs) in frequency domain. The PSBCH occupies 11 consecutive resource blocks (resource blocks, RBs) in frequency domain, and the PSBCH may carry a master information block (master information block, MIB) and a corresponding reference signal, for example, a demodulation reference signal (demodulation reference signal, DMRS). The MIB may include 12 bits (bits) indicating uplink and downlink slot distribution, 1 bit indicating whether the UE sending the S-SSB is located within coverage of a base station, 10 bits indicating a direct frame number (direct frame number, DFN), 7 bits indicating a slot (slot) index (index), and 2 reserved (reserved) bits.

The PSBCH (or the MIB) is obtained by using processes such as channel coding, interleaving, and symbol mapping. For this, still refer to FIG. 1. Before channel coding is performed on the MIB, a cyclic redundancy check (cyclic redundancy check, CRC) may be first added, and then channel coding is performed on a MIB to which the CRC is added. In FIG. 1, a polar code (polar code) is used as an example. After channel coding, a channel coding result may be modulated. In FIG. 1, quadrature amplitude modulation (quadrature amplitude modulation, QAM) is used as an example.

During initial access, a receiving device of the S-SSB may obtain symbol synchronization by blindly searching for a correlation peak of the S-PSS in time domain, implement frequency synchronization by jointly detecting a plurality of adjacent S-PSSs, and then search for the S-SSS in frequency domain to obtain an identifier of a cell. Further, the receiving device parses information carried by the PSBCH. For example, the receiving device may perform channel equalization (equalization, EQ) by using the DMRS, and then obtain information included in the MIB by using processes such as demapping (demapping), de-interleaving, and channel decoding (decoding). The receiving device may position a resource pool based on the 12 bits indicating uplink and downlink slot distribution, and can implement frame synchronization with a transmit end of the S-SSB based on the DFN and the slot index that are indicated by the MIB.

However, in many sensing scenarios (such as a home sensing scenario or an industrial application scenario), to limit costs, generally, only a simple radar sensing module is configured for a sensing UE, and functional modules such as a channel coding/decoding module and a modulation/demodulation module are not configured for the sensing UE. In this case, the sensing UE may fail to generate a PSBCH by using a process such as channel coding, and fail to perform an operation such as channel decoding on a PSBCH in a received S-SSB. Consequently, synchronization cannot be implemented.

In view of this, in embodiments of this application, a first sequence may be used for carrying frame synchronization information. For a sensing device, because the frame synchronization information may be carried by using a sequence, sending of an SL synchronization signal is implemented. However, for a receive end of the SL synchronization signal, even if the receive end is a sensing device configured with only a simple radar sensing module and cannot identify a PSBCH, the sensing device can still identify the first sequence. Therefore, synchronization can be performed based on the frame synchronization information carried by using the first sequence. It may be learned that because the frame synchronization information is carried by using the sequence, the sensing device can still implement synchronization without identifying the PSBCH.

The technical solutions provided in embodiments of this application may be applied to a 4th generation (4th generation, 4G) mobile communication technology system, for example, a long term evolution (long term evolution, LTE) system, may be applied to a 5G system, for example, a new radio (new radio, NR) system, or may be further applied to a next generation mobile communication system or another similar communication system, for example, a 6th generation (6th generation, 6G) mobile communication technology system. This is not specifically limited. In addition, the technical solutions provided in embodiments of this application may be applied to a D2D scenario, for example, an NR-D2D scenario, or may be applied to a V2X scenario, for example, an NR-V2X scenario. For example, the technical solutions provided in embodiments of this application may be applied to fields such as whole-house intelligence, intelligent driving, assisted driving, or intelligent connected vehicles.

FIG. 2 shows a communication network architecture to which an embodiment of this application is applied. FIG. 2 includes a UE 1 and a UE 2. A communication scenario in this embodiment of this application may further include more or fewer UEs. In FIG. 2, only two UEs are used as an example. The UE 1 and/or the UE 2 may be sensing devices/a sensing device or communication devices/a communication device, and types of the two UEs may be the same or different. The UE 1 and/or the UE 2 may be located outside coverage of an access network device and a global navigation satellite system (global navigation satellite system, GNSS), or may be located within the coverage of the access network device and the GNSS. The UE 1 and the UE 2 can communicate with each other through an SL. For example, an SL synchronization signal can be transmitted between the two UEs.

To better describe embodiments of this application, the following describes, with reference to the accompanying drawings, methods provided in embodiments of this application. Unless otherwise specified in the following, the UE (for example, a first UE or a second UE) described in embodiments of this application may be a sensing device, or may be a communication device. In embodiments of this application, the SL synchronization signal is, for example, an S-SSB, or may be another signal used for synchronization. In embodiments of this application, a time domain unit is, for example, a radio frame (radio frame, RF), a subframe (subframe), a slot (slot), a mini-slot (mini-slot), or an orthogonal frequency division multiplexing (orthogonal frequency division multiplexing, OFDM) symbol (symbol). A frequency domain unit is, for example, a subchannel (subchannel), a channel (channel), a bandwidth part (bandwidth part, BWP), a resource pool (resource pool, RP), or a resource block (resource block, RB) set (set). A bandwidth of one channel is, for example, 540 MHz.

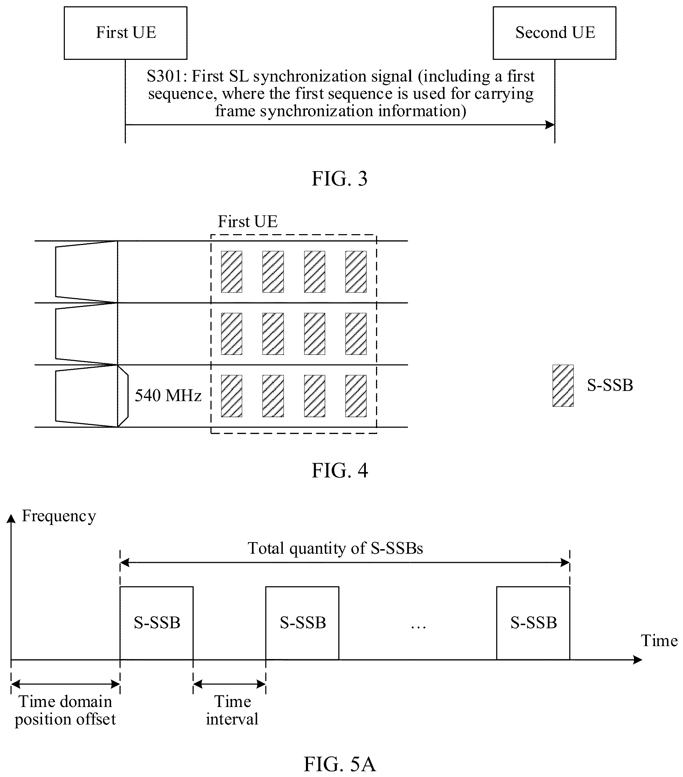

An embodiment of this application provides a communication method. FIG. 3 is a flowchart of the method. The method provided in this embodiment of this application may be applied to the network architecture shown in FIG. 2. For example, a first UE in this embodiment of this application may be the UE 1 in FIG. 2, and a second UE in this embodiment of this application may be the UE 2 in FIG. 2.

S301: The first UE sends a first SL synchronization signal. Correspondingly, the second UE receives the first SL synchronization signal from the first UE. Optionally, the first UE may send the first SL synchronization signal in a broadcast manner, a multicast manner, a unicast manner, or another manner. If the first UE sends the first SL synchronization signal in the broadcast manner or the multicast manner, the second UE may be one of receive ends of the first SL synchronization signal.

The first UE is, for example, a sensing device, or may be a communication device. The second UE may be a sensing device or a communication device. A type of the first UE may be the same as a type of the second UE. For example, both the first UE and the second UE are sensing devices. Alternatively, a type of the first UE may be different from a type of the second UE. For example, the first UE is a sensing device, and the second UE is a communication device.

The first UE may send the first SL synchronization signal in all or a part of frequency domain units supported by the first UE. The frequency domain units supported by the first UE include, for example, a frequency domain unit in which the first UE works, or include a frequency domain unit configured for the first UE. For example, the first UE is a sensing device, and the first UE occupies a plurality of subchannels for sensing. In this case, the first UE may send the first SL synchronization signal on a part or all of the plurality of subchannels. If the first UE sends the first SL synchronization signal on a part of the plurality of subchannels, power consumption of the first UE is reduced. Alternatively, if the first UE sends the first SL synchronization signal on all of the plurality of subchannels, the first UE can be synchronized with UEs on all of the plurality of subchannels, and this is more conducive to implementing global synchronization and reducing interference between the UEs. For example, refer to FIG. 4. The first UE occupies three subchannels. In this case, the first UE may send an SL synchronization signal on the three subchannels. Optionally, within one synchronization cycle, there may be a plurality of synchronization resources for sending the SL synchronization signal. In this case, the first UE may send a plurality of SL synchronization signals in one frequency domain unit. In FIG. 4, an example in which the first UE sends four SL synchronization signals in one frequency domain unit is used.

The first SL synchronization signal may include a first sequence, and the first sequence may carry frame synchronization information. The frame synchronization information includes, for example, information such as a DFN and a slot index. It may be understood as that the frame synchronization information is originally information carried in a PSBCH. For example, a MIB carried in the PSBCH includes the frame synchronization information. However, the sensing device cannot generate the PSBCH by using a process such as channel coding (for example, including processes such as channel coding, interleaving, and symbol mapping), and cannot perform processing such as channel decoding on the PSBCH. Therefore, in this embodiment of this application, the first sequence may be used for carrying the frame synchronization information. Regardless of whether the first UE is a sensing device or a communication device, the first UE can generate the first sequence, and therefore can send the SL synchronization signal. Regardless of whether the second UE is a sensing device or a communication device, the second UE can identify the first sequence, and therefore can obtain the frame synchronization information carried by using the first sequence. It can be learned that, according to the method provided in this embodiment of this application, synchronization can be implemented between sensing devices.

Optionally, an SL synchronization signal sent by the communication device may not carry the frame synchronization information by using a sequence, but continue to carry the frame synchronization information by using the PSBCH. Alternatively, an SL synchronization signal sent by the communication device may carry the frame synchronization information by using a sequence. In this case, because the sensing device can identify frame synchronization information of the SL synchronization signal from the communication device, and the communication device can also identify frame synchronization information of an SL synchronization signal from the sensing device, synchronization can also be implemented between the sensing device and the communication device.

Optionally, in this embodiment of this application, the frame synchronization information may be included in the MIB. For example, the first sequence may carry the MIB, and the MIB includes the frame synchronization information. To increase a transmission correct ratio of the MIB, a CRC may be further added to the MIB. For example, the first sequence carries the MIB and the CRC. A length of the CRC is not limited.

The first sequence may occupy a plurality of consecutive frequency domain units in frequency domain, occupy a plurality of frequency domain units in a comb (comb) manner, or occupy a plurality of frequency domain units in an irregular manner (or occupy a plurality of irregular frequency domain units). The plurality of irregular frequency domain units may be understood as that the plurality of frequency domain units are distributed irregularly. For example, any two adjacent frequency domain units in the plurality of frequency domain units may be consecutive or inconsecutive in frequency domain. A total quantity of frequency domain units occupied by the first sequence is not limited in this embodiment of this application. For any frequency domain unit occupied by the first sequence, the first sequence may occupy all of the frequency domain unit, or may occupy a part of the frequency domain unit.

In addition, the first sequence may occupy one or more time domain units in time domain. If the first sequence occupies a plurality of time domain units, any two adjacent time domain units in the plurality of time domain units may be consecutive or inconsecutive in time domain. If two adjacent time domain units in the plurality of time domain units are inconsecutive in time domain, optionally, a time domain unit between the two time domain units may be used as a guard interval.

Optionally, the first sequence may be repeated N times in the first SL synchronization signal. Alternatively, it may be understood as that the first SL synchronization signal includes N first sequences, the N first sequences are the same, and N is a positive integer. The first sequence is repeatedly sent, so that a received signal-to-noise ratio of the first SL synchronization signal can be increased.

For example, the first sequence is an M sequence, a gold sequence, or a ZC (Zadoff Chu) sequence, or may be another sequence. The first sequence may correspond to a first cyclic shift. For example, the first UE may group, at a granularity of k bits, bit streams including the CRC and the MIB including the frame synchronization information, to obtain, for example, M groups. The first UE converts a bit stream included in each of the obtained M groups into decimal data. Then, the first UE evenly maps the obtained decimal data to the first sequence having the first cyclic shift. Each of the M groups includes k bits, or a quantity of bits included in a last group of the M groups may be less than k, where k is a positive integer, for example, k=2, 3, 4, 5... M is a positive integer.

Optionally, a MIB carried by a PSBCH included in an S-SSB sent by an existing communication UE includes information irrelevant to a sensing service. The information irrelevant to the sensing service may include one or more of the following: information indicating uplink and downlink slot distribution, information indicating whether the first UE is located within coverage of an access network device, or a reserved bit. The information indicating uplink and downlink slot distribution is, for example, the foregoing 12 bits indicating uplink and downlink slot distribution. For example, if the first UE is located outside the coverage of the access network device, or it is understood as that in a scenario in which there is no coverage of the access network device, the first UE does not interact with the access network device. Therefore, the first UE does not have an uplink-related transmission process, and the MIB may not need to indicate uplink and downlink slot distribution. In this case, it is considered that the information indicating uplink and downlink slot distribution is the information irrelevant to the sensing service.

The information indicating whether the first UE is located within the coverage of the access network device is, for example, the foregoing 1 bit indicating whether the UE sending the S-SSB is within the coverage of the base station. If the first UE is located outside the coverage of the access network device, or it is understood as that in a scenario in which there is no coverage of the access network device, the MIB may not need to indicate whether the first UE is located within the coverage of the access network device. Therefore, in this case, it is considered that the information indicating whether the first UE is located within the coverage of the access network device is the information irrelevant to the sensing service.

The reserved bit is a bit that has not been used in the MIB, and may also be considered as the information irrelevant to the sensing service.

In this embodiment of this application, the first sequence may carry the MIB, and the MIB may continue to include the information irrelevant to the sensing service. Therefore, a change to a format of the MIB may be reduced, so that this embodiment of this application can be better compatible with the conventional technology. For example, the MIB includes the frame synchronization information, and includes the information irrelevant to the sensing service. Alternatively, the MIB carried by the first sequence may not include the information irrelevant to the sensing service. For example, the MIB includes only the frame synchronization information, so that overheads of the first sequence can be reduced. For example, the information irrelevant to the sensing service may be set as an optional item, and the first UE determines whether to include the information in the MIB carried by the first sequence; whether the MIB carried by the first sequence includes the information may be configured by a network device (for example, the access network device) for the UE; or whether the MIB carried by the first sequence includes the information may be preconfigured in the UE.

Optionally, because the first SL synchronization signal in this embodiment of this application includes the first sequence used for carrying the frame synchronization information, the first SL synchronization signal may not need to include the PSBCH. Therefore, overheads of the first SL synchronization signal can be reduced.

It may be learned from the foregoing content that this embodiment of this application proposes a new SL synchronization signal. To be specific, the SL synchronization signal may carry the frame synchronization information by using a sequence. A conventional SL synchronization signal does not include a sequence used for carrying the frame synchronization information, but includes a PSBCH, and the PSBCH carries the frame synchronization information. It is equivalent to that SL synchronization signals are of two types (or formats) after this embodiment of this application proposes the new SL synchronization signal. One type of SL synchronization signal is the SL synchronization signal (for example, the first SL synchronization signal) provided in this embodiment of this application, and the other type of SL synchronization signal is the conventional SL synchronization signal. For example, a type of the SL synchronization signal provided in this embodiment of this application is referred to as a first type (for example, a type of the first SL synchronization signal is the first type), and a type of the conventional SL synchronization signal is referred to as a second type. For example, an SL synchronization signal of the first type is mainly sent by a sensing UE, and an SL synchronization signal of the second type is mainly sent by a communication UE. Therefore, the first type may be a sensing type, and the second type may be a communication type. Optionally, in this embodiment of this application, time division may be implemented between the SL synchronization signal of the first type and the SL synchronization signal of the second type. For example, SL synchronization resources may be respectively configured for SL synchronization signals of the two types, so that UEs of different types (for example, the sensing UE or the communication UE) can receive, at corresponding positions, SL synchronization signals that can be identified.

For example, a time domain position of the SL synchronization signal of the first type may be determined based on a first field, and the first field may be used for configuring the SL synchronization resource for the SL synchronization signal of the first type. For example, if the SL synchronization signal of the first type is sent by the sensing UE, the first field may also be considered to be used for configuring an SL synchronization resource for the sensing UE. For example, the first field is a sensing SSB time allocation (sensing-SSB-TimeAllocation) field, or the first field may have another name.

Optionally, the first field may be included in a message from the access network device. For example, if the first UE is located within the coverage of the access network device, the access network device may configure an SL synchronization resource for the first UE. The access network device may configure the SL synchronization resource for the first UE by sending a message. For example, if the first UE is a sensing device, the message may include the first field.

Alternatively, the first field may be preconfigured in the UE. For example, if the first UE is located outside the coverage of the access network device, an SL synchronization resource that may be used by the first UE to detect the SL synchronization signal and/or send the SL synchronization signal may be preconfigured in the first UE. For example, if the first UE is a sensing device, information used for preconfiguring the SL synchronization resource may include the first field.

The first field is used for configuring the SL synchronization resource. For example, in a configuration manner, the first field includes one or more of a first parameter, a second parameter, or a third parameter, and the SL synchronization resource may be configured by using the one or more parameters. The first parameter represents an offset between a time domain position of a 1^{st} SL synchronization signal of the first type within a synchronization cycle and a start time domain position of the synchronization cycle. The second parameter represents a time interval between two adjacent SL synchronization signals of the first type within the synchronization cycle. The third parameter represents a total quantity of SL synchronization signals of the first type included in the synchronization cycle. Optionally, the first parameter is, for example, an SL-time offset SSB (sl-TimeOffsetSSB); the second parameter is, for example, an SL-time interval (sl-TimeInterval); and the third parameter is, for example, an SL-total quantity within one cycle (sl-Num-WithPeriod). Duration of the synchronization cycle is, for example, 160 ms. For example, FIG. 5A shows an example of the first parameter, the second parameter, and the third parameter. In FIG. 5A, an example in which the SL synchronization signal is an S-SSB is used. In FIG. 5A, the first parameter represents a "time domain position offset", the second parameter represents a "time interval", and the third parameter represents a "total quantity of S-SSBs".

In an optional implementation of the first field, the first field may include a sidelink synchronization signal block time allocation (sl-SSB-TimeAllocation) field, and one or more of the first parameter, the second parameter, or the third parameter included in the first field may be included in the sl-SSB-TimeAllocation field. For example, the sl-SSB-TimeAllocation field included in the first field is referred to as a first sl-SSB-TimeAllocation field.

An existing SL synchronization signal (for example, the SL synchronization signal of the second type) also includes a sl-SSB-TimeAllocation field. To distinguish from a concept in this embodiment of this application, the sl-SSB-TimeAllocation field is, for example, referred to as a second sl-SSB-TimeAllocation field. The second sl-SSB-TimeAllocation field may be used for configuring a fifth parameter, a sixth parameter, and a seventh parameter. The fifth parameter represents an offset between a time domain position of a 1^{st} SL synchronization signal of the second type within the synchronization cycle and the start time domain position of the synchronization cycle. The sixth parameter represents an interval between two adjacent SL synchronization signals of the second type within the synchronization cycle. The seventh parameter represents a total quantity of SL synchronization signals of the second type included in the synchronization cycle. It may be considered that, in this embodiment of this application, the SL synchronization signal of the first type may directly include the sl-SSB-TimeAllocation field in the existing SL synchronization signal. However, the sl-SSB-TimeAllocation field included in the first field does not include the fifth parameter, the sixth parameter, or the seventh parameter, but includes one or more of the first parameter, the second parameter, or the third parameter. This is equivalent to using an existing field format, so that the SL synchronization signal in this embodiment of this application can be better compatible with the conventional technology. A value of the first parameter may be different from a value of the fifth parameter. A value of the second parameter may be the same as or different from a value of the sixth parameter. A value of the third parameter may be the same as or different from a value of the seventh parameter.

Alternatively, in another optional implementation of the first field, the first field may not include a sl-SSB-TimeAllocation field in an existing format, and one or more of the first parameter, the second parameter, or the third parameter may be directly included in the first field.

Regardless of which optional implementation is used for the first field, optionally, the first field may further include a fourth parameter. The fourth parameter may represent an offset of a 1^{st} SL synchronization signal of the first type within one synchronization cycle relative to a 1^{st} SL synchronization signal of the second type within the synchronization cycle. The offset is, for example, one or more time domain units, and the offset may be a positive number or a negative number. For example, if the 1^{st} SL synchronization signal of the first type within the synchronization cycle is located before the 1^{st} SL synchronization signal of the second type within the synchronization cycle, the offset is a negative number. Alternatively, if the 1^{st} SL synchronization signal of the first type within the synchronization cycle is located after the 1^{st} SL synchronization signal of the second type within the synchronization cycle, the offset is a positive number.

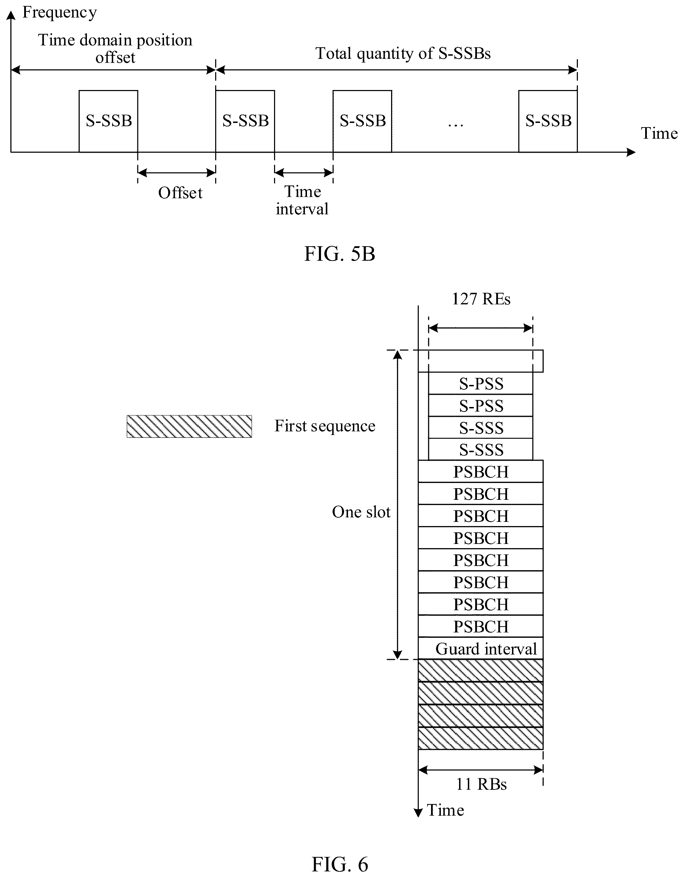

As described above, in this embodiment of this application, time division may be implemented between the SL synchronization signal of the first type and the SL synchronization signal of the second type, and time division can be implemented between the SL synchronization signals of the two types by using the fourth parameter. For example, FIG. 5B shows an example of the fourth parameter. A 1^{st} S-SSB in FIG. 5B is, for example, a 1^{st} S-SSB of the second type within one synchronization cycle, and remaining S-SSBs (for example, including three S-SSBs other than the first S-SSB shown in the figure, and optionally further including S-SSBs represented by ellipses in the figure) are S-SSBs of the first type. In addition, a 1^{st} S-SSB in the remaining S-SSBs is the 1^{st} S-SSB of the first type within the synchronization cycle. For another parameter in FIG. 5B, refer to the descriptions of FIG. 5A.

The fourth parameter is introduced, so that interference between SL synchronization signals can be reduced. For example, in addition to sending an SL synchronization signal, a UE may further detect the SL synchronization signal. For example, after the first UE detects an SL synchronization signal, if a type of the SL synchronization signal does not match a type of the first UE, the first UE may determine, with reference to the fourth parameter, a time domain position used by the first UE to send and/or detect the SL synchronization signal, to reduce a conflict with a synchronization resource of another type of UE.

Optionally, before S301, the first UE receives a second SL synchronization signal on a second resource through blind detection. The first UE may determine a type of the second SL synchronization signal. For example, if the second SL synchronization signal includes the PSBCH, the first UE may determine that the type of the second SL synchronization signal is the second type or a third type (where the third type is described below), or determine that the type of the second SL synchronization signal is not the first type. Alternatively, if the second SL synchronization signal does not include the PSBCH but includes frame synchronization information carried by using a sequence, the first UE may determine that the type of the second SL synchronization signal is the first type. For example, the type of the first UE is the first type. In this case, if the type of the second SL synchronization signal is the first type, it indicates that the type of the second SL synchronization signal matches the type of the first UE. If the type of the second SL synchronization signal is not the first type, it indicates that the type of the second SL synchronization signal does not match the type of the first UE. If the type of the second SL synchronization signal does not match the type of the first UE, it indicates that the second resource is occupied by a UE of another type. In this case, a synchronization resource determined based on the second resource is also occupied by the UE of the another type (for example, the UE of the another type may determine the synchronization resource based on the second resource and one or more of the fifth parameter, the sixth parameter, or the seventh parameter), and the first UE cannot send and/or detect the SL synchronization signal on the second resource (and the synchronization resource determined based on the second resource). In this case, the first UE may determine a first resource with reference to the second resource and the fourth parameter. Therefore, in S301, the first UE may send the first SL synchronization signal on the first resource.

For example, if the first UE determines that the type of the second SL synchronization signal does not match the type of the first UE, the first UE may determine, based on a time domain position of the second resource and the fourth parameter, a time domain position of the synchronization resource used by the first UE to send and/or detect the SL synchronization signal. An example in which the type of the second SL synchronization signal is the second type is used. The first UE may determine an index of the second SL synchronization signal, to determine a time domain position of a 1^{st} SL synchronization signal of the second type within the synchronization cycle. Then, with reference to the fourth parameter, the first UE may determine a time domain position of a 1^{st} SL synchronization signal of the first type within the synchronization cycle. If the time domain position of the 1^{st} SL synchronization signal of the first type within the synchronization cycle has not arrived, the first UE may determine that the time domain position is a time domain position included in the first resource, and the first UE may send the first SL synchronization signal on the first resource. Alternatively, if the time domain position of the 1^{st} SL synchronization signal of the first type within the synchronization cycle has passed, the first UE may further determine, with reference to the second parameter, a time domain position of a latest SL synchronization signal of the first type that has not arrived. The time domain position is a time domain position included in the first resource, and the first UE may send the first SL synchronization signal on the first resource.

The time domain position of the latest SL synchronization signal of the first type that has not arrived may continue to be within the synchronization cycle, or may be within a next synchronization cycle. For example, the first UE may determine, with reference to the third parameter, a total quantity of SL synchronization signals of the first type included in one synchronization cycle, and then determine, with reference to the second parameter and the fourth parameter, a total quantity of SL synchronization signals of the first type that have passed within the synchronization cycle, so that the first UE can determine whether there is still an SL synchronization signal of the first type within the synchronization cycle. If there is still the SL synchronization signal of the first type within the synchronization cycle, the time domain position of the latest SL synchronization signal of the first type that has not arrived continues to be within the synchronization cycle. Alternatively, if there is no SL synchronization signal of the first type within the synchronization cycle, the time domain position of the latest SL synchronization signal of the first type that has not arrived is within the next synchronization cycle, for example, a 1^{st} SL synchronization signal of the first type within the next synchronization cycle.

FIG. 5B is still used as an example. For example, the 1^{st} S-SSB in FIG. 5B is a second SL synchronization signal, and the second resource is a resource carrying the S-SSB. The first UE may determine, based on the time domain position of the second resource and the offset shown in FIG. 5B, the time domain position of the synchronization resource used by the first UE to send and/or detect the SL synchronization signal, that is, a time domain position of a 2^{nd} S-SSB in FIG. 5B, so that the first UE can send the first SL synchronization signal at the time domain position.

In the foregoing descriptions, the SL synchronization signal of the first type may include the sequence used for carrying the frame synchronization information, and does not include the PSBCH. In addition, this embodiment of this application provides an SL synchronization signal of the third type. In addition to carrying frame synchronization information by using a sequence, the SL synchronization signal of the third type may further continue to include a PSBCH, and the PSBCH also includes the frame synchronization information. For example, the PSBCH includes a MIB, and the MIB includes the frame synchronization information. Optionally, the PSBCH may further include a CRC. A length of the CRC included in the PSBCH may be the same as or different from a length of the CRC carried in the first sequence. It is equivalent to that both the SL synchronization signal of the first type and the SL synchronization signal of the second type include one piece of frame synchronization information, and the SL synchronization signal of the third type includes two pieces of same frame synchronization information. Optionally, the SL synchronization signal of the third type may be sent by the communication UE. Therefore, the third type may alternatively be a communication type. It may be understood as that the communication type may further include the second type or the third type. For example, if the first UE is a communication UE, the first UE may send the SL synchronization signal of the third type. For example, the first SL synchronization signal is the SL synchronization signal of the third type. The first SL synchronization signal may carry frame synchronization information by using the first sequence, so that a sensing device that receives the first SL synchronization signal can implement synchronization with the first UE based on the frame synchronization information. In addition, the first SL synchronization signal further includes a PSBCH, and a communication device that receives the first SL synchronization signal can also implement synchronization with the first UE based on the frame synchronization information included in the PSBCH. The communication device may obtain the frame synchronization information by using a sequence included in the SL synchronization signal, or may obtain the frame synchronization information by performing a process such as channel decoding on the PSBCH in the SL synchronization signal. The SL synchronization signal of the third type may be understood as a signal obtained by additionally adding a sequence used for carrying the frame synchronization information to the existing SL synchronization signal (for example, the SL synchronization signal of the second type), and other content included in the existing SL synchronization signal may remain unchanged. This design enables this embodiment of this application to be better compatible with the conventional technology. In addition, this design can also implement synchronization between sensing devices and between the sensing device and the communication device.

For example, FIG. 6 shows an example of the SL synchronization signal of the third type. In FIG. 6, an example in which the SL synchronization signal is an S-SSB is used. It may be learned that the S-SSB includes both a PSBCH and a first sequence. In FIG. 6, an example in which the first sequence is located after a guard interval is used. Alternatively, the first sequence may be located before the guard interval, for example, after the PSBCH and before the guard interval. Optionally, if one SL synchronization signal includes both the PSBCH and the first sequence, a quantity of slots occupied by the SL synchronization signal may be greater than or equal to 1. For example, a quantity of slots occupied by the S-SSB in FIG. 6 is greater than 1.

Optionally, only the SL synchronization signal of the first type may be used in a communication system, and the SL synchronization signal of the third type is not introduced. For example, the sensing UE may send the SL synchronization signal of the first type, and the communication UE may send the SL synchronization signal of the second type. In this way, it is equivalent to that only an SL synchronization signal of one type is changed, and the conventional SL synchronization signal may continue to be used, so that this embodiment of this application is better compatible with the conventional technology. Alternatively, the SL synchronization signal of the first type and the SL synchronization signal of the third type may coexist in the communication system. For example, the sensing UE may send the SL synchronization signal of the first type, and the communication UE may send the SL synchronization signal of the third type. In this manner, synchronization can be implemented between the sensing devices and between the sensing device and the communication device, and this is more conducive to implementing global synchronization.

In this embodiment of this application, the first sequence may be used for carrying the frame synchronization information. For the sensing device, because the frame synchronization information may be carried by using a sequence, sending of an SL synchronization signal is implemented. However, for a receive end of the SL synchronization signal, even if the receive end is a sensing device and cannot identify a PSBCH, the sensing device can still identify the first sequence. Therefore, synchronization can be performed based on the frame synchronization information carried by using the first sequence. It may be learned that because the frame synchronization information is carried by using the sequence, the sensing device can still implement synchronization without identifying the PSBCH. Optionally, in addition to the PSBCH, the SL synchronization signal sent by the communication device may further include the sequence used for carrying the frame synchronization information, and this is more conducive to implementing global synchronization of more UEs.

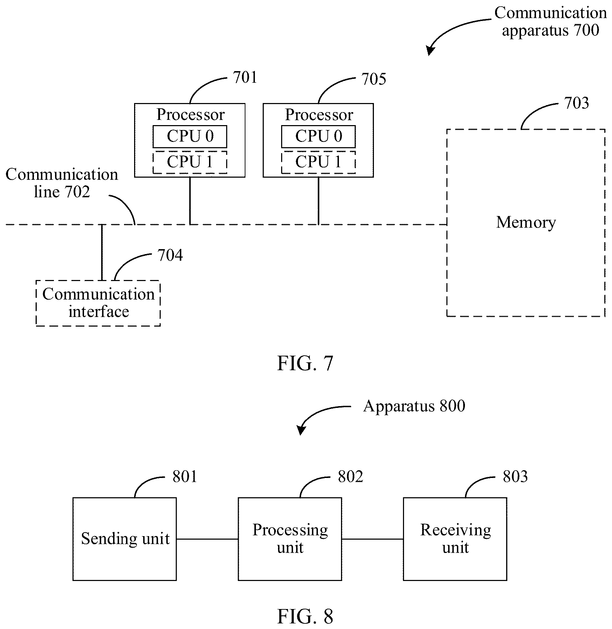

FIG. 7 is a diagram of a structure of a communication apparatus according to an embodiment of this application. The communication apparatus 700 may be the first UE in the embodiment shown in FIG. 3 or a circuit system of the first UE, and is configured to implement the method corresponding to the first UE in the foregoing method embodiment. Alternatively, the communication apparatus 700 may be the second UE in the embodiment shown in FIG. 3 or a circuit system of the second UE, and is configured to implement the method corresponding to the second UE in the foregoing method embodiment. For example, a circuit system is a chip system.

The communication apparatus 700 includes at least one processor 701. The processor 701 may be configured to perform internal processing of the apparatus, to implement a specific control processing function. Optionally, the processor 701 includes instructions. Optionally, the processor 701 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 700 includes one or more memories 703, configured to store instructions. Optionally, the memory 703 may further store data. The processor and the memory may be separately disposed, or may be integrated together.

Optionally, the communication apparatus 700 includes a communication line 702 and at least one communication interface 704. Because the memory 703, the communication line 702, and the communication interface 704 are all optional, and are all represented by dashed lines in FIG. 7.

Optionally, the communication apparatus 700 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 700 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 701 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 702 may include a path, to transfer information between the foregoing components.

The communication interface 704 uses any transceiver-type apparatus, to communicate with another device or a communication network, for example, the ethernet, a radio access network (radio access network, RAN), a wireless local area network (wireless local area network, WLAN), or a wired access network.

The memory 703 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blue-ray disc, or the like), a magnetic disk storage medium or another magnetic storage device, or any other medium that can be configured to carry or store expected program code in the form of instructions or a data structure and that can be accessed by a computer, but is not limited thereto. The memory 703 may exist independently and is connected to the processor 701 through the communication line 702. Alternatively, the memory 703 may be integrated with the processor 701.

The memory 703 is configured to store computer-executable instructions for executing the solutions of this application, and the processor 701 controls execution. The processor 701 is configured to execute the computer-executable instructions stored in the memory 703, to implement the steps performed by the first UE or the second UE in the embodiment shown in FIG. 3.

Optionally, the computer-executable instructions in this embodiment of this application may also be referred to as application program code. This is not specifically limited in this embodiment of this application.

During specific implementation, in an embodiment, the processor 701 may include one or more CPUs, for example, a CPU 0 and a CPU 1 in FIG. 7.

During specific implementation, in an embodiment, the communication apparatus 700 may include a plurality of processors, for example, the processor 701 and a processor 705 shown in FIG. 7. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 7 is a chip, for example, a chip of the first UE or a chip of the second UE, the chip includes the processor 701 (which may further include the processor 705), the communication line 702, and the communication interface 704. Optionally, the chip may include the memory 703. Specifically, the communication interface 704 may be an input interface, a pin, a circuit, or the like. The memory 703 may be a register, a cache, or the like. The processor 701 and the processor 705 may be one general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in the form of hardware, or may be implemented in the form of a software function module. It should be noted that, in embodiments of this application, module division is an example, and is merely a logical function division. During actual implementation, another division manner may be used. For example, when each functional module is obtained through division based on each corresponding function, FIG. 8 is a diagram of an apparatus. The apparatus 800 may be the first UE or the second UE in the foregoing method embodiments, or a chip in the first UE or a chip in the second UE. The apparatus 800 includes a sending unit 801, a processing unit 802, and a receiving unit 803.

It should be understood that the apparatus 800 may be configured to implement the steps performed by the first UE or the second UE in the communication method in this embodiment of this application. For related features, refer to the foregoing embodiments shown in FIG. 3. Details are not described herein again.

Optionally, functions/implementation processes of the sending unit 801, the receiving unit 803, and the processing unit 802 in FIG. 8 may be implemented by the processor 701 in FIG. 7 by invoking the computer-executable instructions stored in the memory 703. Alternatively, the function/the implementation process of the processing unit 802 in FIG. 8 may be implemented by the processor 701 in FIG. 7 by invoking the computer-executable instructions stored in the memory 703, and the functions/the implementation processes of the sending unit 801 and the receiving unit 803 in FIG. 8 may be implemented by the communication interface 704 in FIG. 7.

Optionally, when the apparatus 800 is a chip or a circuit, the functions/the implementation processes of the sending unit 801 and the receiving unit 803 may alternatively be implemented by a pin, a circuit, or the like.

This application further provides a computer-readable storage medium. The computer-readable storage medium stores a computer program or instructions. When the computer program or the instructions are run, the method performed by the first UE or the second UE in the foregoing method embodiments is implemented. In this way, the functions in the foregoing embodiments may be implemented in the form of a software functional unit and sold or used as an independent product. Based on such an understanding, the technical solutions of this application essentially, or the part contributing to conventional technologies, or a part of the technical solutions may be implemented in the form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE or the second UE in any one of the foregoing method embodiments.

An embodiment of this application further provides a processing apparatus, including a processor and an interface. The processor is configured to perform the method performed by the first UE or the second UE in any one of the foregoing method embodiments.

All or a part of the foregoing embodiments may be implemented by using software, hardware, firmware, or any combination thereof. When the software is used to implement the embodiments, all or a part of embodiments may be implemented in the form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logic units and circuits described in embodiments of this application may implement or operate the described functions by a general-purpose processor, a digital signal processor (digital signal processor, DSP), an ASIC, a field programmable gate array (field programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor can read information from the storage medium and write information to the storage medium. Optionally, the storage medium may alternatively be integrated into a processor. The processor and the storage medium may be disposed in an ASIC, and the ASIC may be disposed in a terminal device. Optionally, the processor and the storage medium may be disposed in different parts of the terminal device.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first UE and/or the second UE may perform a part or all of the steps in embodiments of this application. The steps or operations are merely examples. In embodiments of this application, other operations or variations of various operations may be further performed. In addition, the steps may be performed in a sequence different from a sequence presented in embodiments of this application, and not all operations in embodiments of this application may be performed.

## Claims

1. A communication method, applied to a first terminal device, wherein the method comprises:
sending a first sidelink synchronization signal, wherein the first sidelink synchronization signal comprises a first sequence, the first sequence is used for carrying frame synchronization information, and the frame synchronization information is used by another terminal device to synchronize with the first terminal device.

2. The method according to claim 1, wherein the first sequence is further used for carrying a cyclic redundancy check CRC.

3. The method according to claim 2, wherein the frame synchronization information is comprised in a master information block MIB, and the MIB comprises only the frame synchronization information.

4. The method according to any one of claims 1 to 3, wherein the first sequence is repeated N times in the first sidelink synchronization signal, and N is a positive integer.

5. The method according to any one of claims 1 to 4, wherein the first sequence is an M sequence, a gold sequence, or a ZC sequence.

6. The method according to any one of claims 1 to 5, wherein
the first sequence occupies a plurality of consecutive frequency domain units, or occupies a plurality of frequency domain units in a comb manner; and/or
the first sequence occupies one or more time domain units.

7. The method according to any one of claims 1 to 6, wherein the first terminal device is a sensing device.

8. The method according to claim 7, wherein
a time domain position of the first sidelink synchronization signal is determined based on a first field, the first field is used for configuring a sidelink synchronization resource for the sensing device, the first field and a second sidelink synchronization signal block time allocation field are different fields, and the second sidelink synchronization signal block time allocation field is used for configuring a sidelink synchronization resource for a communication device.

9. The method according to claim 8, wherein the first field is used for configuring a first parameter, a second parameter, and a third parameter, wherein
the first parameter represents an offset between a time domain position of a 1^{st} sidelink synchronization signal of a sensing type within a synchronization cycle and a start time domain position of the synchronization cycle;
the second parameter represents an interval between two adjacent sidelink synchronization signals of the sensing type within the synchronization cycle; and
the third parameter represents a total quantity of sidelink synchronization signals of the sensing type comprised in the synchronization cycle.

10. The method according to claim 9, wherein the first field comprises a first sidelink synchronization signal block time allocation field, and the first sidelink synchronization signal block allocation field is used for configuring the first parameter, the second parameter, and the third parameter.

11. The method according to any one of claims 8 to 10, wherein the first field is further used for configuring a fourth parameter, wherein the fourth parameter represents an offset of the 1^{st} sidelink synchronization signal of the sensing type within the synchronization cycle relative to a 1^{st} sidelink synchronization signal of a communication type within the synchronization cycle.

12. The method according to claim 11, wherein the method further comprises:
receiving a second sidelink synchronization signal on a second resource;
determining, based on a format of the second sidelink synchronization signal, that the second sidelink synchronization signal is a sidelink synchronization signal of the communication type; and
determining a first resource based on the fourth parameter and the second resource, wherein the first resource is used for sending the first sidelink synchronization signal.

13. The method according to any one of claims 8 to 12, wherein the second sidelink synchronization signal block time allocation field is used for configuring a fifth parameter, a sixth parameter, and a seventh parameter, wherein
the fifth parameter represents an offset between a time domain position of the 1^{st} sidelink synchronization signal of the communication type within the synchronization cycle and the start time domain position of the synchronization cycle;
the sixth parameter represents an interval between two adjacent sidelink synchronization signals of the communication type within the synchronization cycle; and
the seventh parameter represents a total quantity of sidelink synchronization signals of the communication type comprised in the synchronization cycle.

14. The method according to any one of claims 8 to 13, wherein sending the first sidelink synchronization signal comprises:
sending the first sidelink synchronization signal in all or a part of frequency domain units supported by the first terminal device.

15. The method according to any one of claims 1 to 6, wherein the first terminal device is a communication device, the first sidelink synchronization signal further comprises a physical sidelink broadcast channel PSBCH, and the PSBCH carries the frame synchronization information.

16. A communication method, applied to a second terminal device, wherein the method comprises:
receiving a first sidelink synchronization signal from a first terminal device, wherein the first sidelink synchronization signal comprises a first sequence, and the first sequence is used for carrying frame synchronization information; and
synchronizing with the first terminal device based on the frame synchronization information.

17. The method according to claim 16, wherein the first sequence is further used for carrying a CRC.

18. The method according to claim 17, wherein the frame synchronization information is comprised in a MIB, and the MIB comprises only the frame synchronization information.

19. The method according to any one of claims 16 to 18, wherein the first sequence is repeated N times in the first sidelink synchronization signal, and N is a positive integer.

20. The method according to any one of claims 16 to 19, wherein the first sequence is an M sequence, a gold sequence, or a ZC sequence.

21. The method according to any one of claims 16 to 20, wherein
the first sequence occupies a plurality of consecutive frequency domain units, or occupies a plurality of frequency domain units in a comb manner; and/or
the first sequence occupies one or more time domain units.

22. The method according to any one of claims 16 to 21, wherein the second terminal device is a sensing device.

23. The method according to claim 22, wherein
a time domain position of the first sidelink synchronization signal is determined based on a first field, the first field is used for configuring a sidelink synchronization resource for the sensing device, the first field and a second sidelink synchronization signal block time allocation field are different fields, and the second sidelink synchronization signal block time allocation field is used for configuring a sidelink synchronization resource for a communication device.

24. The method according to claim 23, wherein the first field is used for configuring a first parameter, a second parameter, and a third parameter, wherein
the first parameter represents an offset between a time domain position of a 1^{st} sidelink synchronization signal of a sensing type within a synchronization cycle and a start time domain position of the synchronization cycle;
the second parameter represents an interval between two adjacent sidelink synchronization signals of the sensing type within the synchronization cycle; and
the third parameter represents a total quantity of sidelink synchronization signals of the sensing type comprised in the synchronization cycle.

25. The method according to claim 24, wherein the first field comprises a first sidelink synchronization signal block time allocation field, and the first sidelink synchronization signal block time allocation field is used for configuring the first parameter, the second parameter, and the third parameter.

26. The method according to any one of claims 23 to 25, wherein the first field is further used for configuring a fourth parameter, wherein the fourth parameter represents an offset of the 1^{st} sidelink synchronization signal of the sensing type within the synchronization cycle relative to a 1^{st} sidelink synchronization signal of a communication type within the synchronization cycle.

27. The method according to any one of claims 23 to 26, wherein the second sidelink synchronization signal block time allocation field is used for configuring a fifth parameter, a sixth parameter, and a seventh parameter, wherein
the fifth parameter represents an offset between a time domain position of the 1^{st} sidelink synchronization signal of the communication type within the synchronization cycle and the start time domain position of the synchronization cycle;
the sixth parameter represents an interval between two adjacent sidelink synchronization signals of the communication type within the synchronization cycle; and
the seventh parameter represents a total quantity of sidelink synchronization signals of the communication type comprised in the synchronization cycle.

28. The method according to any one of claims 16 to 21, wherein the first sidelink synchronization signal further comprises a PSBCH, and the PSBCH carries the frame synchronization information.

29. A communication apparatus, wherein the communication apparatus comprises a processing unit and a transceiver unit, and the processing unit is coupled to the transceiver unit, to perform the method according to any one of claims 1 to 15 or the method according to any one of claims 16 to 28.

30. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 15 or enable the communication apparatus to perform the method according to any one of claims 16 to 28.

31. A computer-readable storage medium, wherein the computer-readable storage medium is configured to store a computer program, and when the computer program is run on a computer, the computer is enabled to perform the method according to any one of claims 1 to 15 or the computer is enabled to perform the method according to any one of claims 16 to 28.

32. A computer program product, wherein the computer program product comprises a computer program, and when the computer program is run on a computer, the computer is enabled to perform the method according to any one of claims 1 to 15 or the computer is enabled to perform the method according to any one of claims 16 to 28.

33. A chip system, wherein the chip system comprises:
a processor and an interface, wherein the processor is configured to invoke instructions from the interface and run the instructions, and when the processor executes the instructions, the method according to any one of claims 1 to 15 is implemented, or the method according to any one of claims 16 to 28 is implemented.
